# EUROPÄISCHE PATENTSCHRIFT

(11) **EP 0 449 029 B1**
(45) Veröffentlichungstag und Bekanntmachung des Hinweises auf die Patenterteilung: **25.05.1994**
(21) Anmeldenummer: 91103758.8
(22) Anmeldetag: 12.03.1991
(51) Int. Cl.: B66F 9/20, B66F 9/075

(54) **Deichselgeführtes elektrisches Flurförderzeug**
Hand-guided electric industrial truck
Chariot de manutention électrique guidé à timon

(30) Priorität: 22.03.1990 FR 9003665
(43) Veröffentlichungstag der Anmeldung: 02.10.1991
(73) Patentinhaber: Linde Aktiengesellschaft, 65189 Wiesbaden (DE)
(72) Erfinder: Hurtevent, Jaques, F-86100 Chatellerault (FR)
(74) Vertreter: Schaefer, Gerhard, Dr.

(56) Entgegenhaltungen:
- DE-A- 2 541 190
- US-A- 4 287 966

## Beschreibung

Die Erfindung betrifft ein deichselgeführtes elektrisches Flurförderzeug zum wahlweisen Betrieb als Elektro-GehGerät oder als Elektro-Stand-Gerät mit einer Standplattform.

Ein derartiges Flurförderzeug ist aus der US-A-4 287 966 bekannt. Zwischen der Deichsel und den Lastanhebemitteln befindet sich eine Standplattform. Das Flurförderzeug kann daher von dieser Standplattform aus bedient werden. Im Gegensatz zu einem Flurförderzeug, das ausschließlich für den Betrieb als Elektro-Geh-Gerät vorgesehen ist, kann die Bedienperson auf dem Gerät mitfahren, wodurch beim Transport über längere Strecken Zeit gespart wird, weil dann eine höhere Fahrzeuggeschwindigkeit möglich ist als dies bei einer mitlaufenden Bedienperson der Fall wäre. Allerdings weist das gattungsgemäße Fahrzeug den Nachteil einer größeren Baulänge gegenüber einem reinen Elektro-Geh-Gerät auf.

Die erfindungsgemäße Flurförderung vereint in sich den Vorteil hoher Manövrierbarkeit und platzsparender Bauweise eines Elektro-Geh-Gerätes, der bei Bedienung durch einen das Fahrzeug zu Fuß steuernden Fahrer gegeben ist, mit dem Vorteil der hohen Geschwindigkeit eines Elektro-Stand-Gerätes, bei dem der Fahrer auf einer Standplattform vom Fahrzeug mittransportiert wird.

Der vorliegenden Erfindung liegt die Aufgabe zugrunde, ein verbessertes Flurförderzeug der gattungsgemäßen Art mit hoher Fahrsicherheit und einfacher Bedienung zur Verfügung zu stellen.

Diese Aufgabe wird erfindungsgemäß dadurch gelöst, daß die Standplattform klappbar und mit einer in Betriebsstellung vom Fahrer betätigbaren und im betätigten Zustand eine Bewegung der Standplattform aus der Betriebsstellung heraus verhindernden Verriegelungseinrichtung versehen ist. Die Standplattform ist dabei deichselseitig quer zur Fahrzeuglängsachse angebracht und befindet sich in Ruhestellung, also in der erstgenannten Betriebsart des Fahrzeugs, in einem hochgeklappten Zustand, in dem sie in einer annähernd parallelen Position zur Fahrzeugvorderwand angeordnet ist. Der Wechsel von der erstgenannten in die zweitgenannte Betriebsart, also in die Betriebsstellung, ist sehr schnell möglich und geschieht durch Herunterklappen der Standplattform um eine quer zur Fahrzeuglängsachse am unteren Ende des Fahrzeugs angeordnete Schwenkachse. Der Fahrer kann nach Besteigen der Standplattform das Fahrzeug mit einer wesentlich höheren Geschwindigkeit bewegen als wenn er das Fahrzeug zu Fuß betätigen muß. Dies ist insbesondere dann von Vorteil, wenn das zu fördernde Gut über eine größere Strecke transportiert werden muß, weil dadurch Zeit gespart wird.

In dieser Betriebsart kann es insbesondere bei höheren Geschwindigkeiten infolge Fahrbahnunebenheiten oder Hindernissen auf der Fahrbahn, über die das Fahrzeug fährt, zu erheblichen Stößen in vertikaler Richtung kommen, die zu Bewegungen der Standplattform führen. Weil der Fahrer sich ausschließlich an der dreh- und schwenkbaren Deichsel abstützt, kann es infolge der nicht kalkulierbaren Bewegungen der Standplattform zu unbeabsichtigen Fehlbedienungen der an der Deichsel befindlichen Bedienungsorgane des Fahrzeugs kommen und damit zu gefährlichen Fahrzuständen.

Darüber hinaus kommt es vor, daß beim Fahren durch eine Fahrbahnsenke oder auf einer Rampe, insbesondere bei einer Fahrt mit der Deichselseite in Fahrtrichtung, das zur Schwenkachse ferne Ende der Standplattform unter Umständen auf der Fahrbahn oder auf der Rampe aufsitzt und nach oben gedrückt wird, wodurch erhebliche Quetschgefahr für die Beine des Fahrers besteht.

Durch die Verriegelung der Standplattform werden Bewegungen derselben aus der Betriebsstellung heraus unmöglich gemacht und es wird somit die Betriebssicherheit des Flurförderzeugs beim Betrieb als Elektro-Stand-Gerät erheblich verbessert. Die Reaktion des Fahrzeugs auf Vertikalstöße infolge Bodenunebenheiten ist zudem voraussehbarer.

Zweckmäßigerweise ist die Verriegelung so stabil ausgelegt, daß sie in der Lage ist, bei auf der Fahrbahn oder auf einer Rampe aufsitzender Standplattform das Eigengewicht des Fahrzeuges mit aufgesessenem Fahrer einschließlich der auf den Gabeln befindlichen Nutzlast auszuhalten, ohne nachzugeben.

Eine erfindungsgemäße Weiterbildung der Erfindung besteht darin, daß die Standplattform mit einem fußbetätigten Totmannschalter versehen ist und der Totmannschalter und die Verriegelungseinrichtung ein gemeinsames Betätigungselement aufweisen. Der Totmannschalter unterbricht, sofern er nicht ständig betätigt ist, die Stromzufuhr zum Antriebsmotor des Fahrzeugs und löst gegebenenfalls eine Bremse aus, z.B. eine elektrisch lösbare Federspeicherbremse. Dadurch kann sich das Fahrzeug bei aufgesessenem Fahrer nur mit aktiviertem Totmannschalter in Bewegung setzen. Stürzt der Fahrer während der Fahrt von der Standplattform herunter, so wird das Fahrzeug automatisch stillgesetzt. Durch das gemeinsame Betätigungselement ergeben sich Vorteile bezüglich Bedienungserleichterung und Sicherheitsgewinn. Es muß nur ein einziges Betätigungselement bedient werden, um sowohl die Standplattform zu verriegeln als auch den Totmannschalter in die Position zu bringen, in der das Fahrzeug gefahren werden kann. Bei einem Fahrzeug mit Totmannschalter ist die Verriegelung der Standplattform in der Betriebsstellung besonders sinnvoll. Wenn nämlich keine Verriegelung vorhanden ist und sich infolge von Vertikalstößen die Standplattform unkontrolliert aus der Betriebsstellung herausbewegt, kann der Fahrerfuß vom Totmannschalter abrutschen und das Fahrzeug abrupt abgebremst und stillgesetzt werden. Insbesondere bei einem starken Abbremsen aus einer höheren Geschwindigkeit kann dadurch die Last von den Hubgabeln abgeworfen werden. Eine solche Fahrsituation kann durch die Verriegelung der Standplattform verhindert werden.

Um sicherzustellen, daß das gemeinsame Betätigungselement für den Totmannschalter und die Verriegelungsvorrichtung auch bei Gewichtsverlagerungen und Positionsänderungen des Fahrers auf der Standplattform seinen Schaltzustand beibehält, ist es günstig, das Betätigungselement als zur gleichzeitigen Aufnahme beider Fahrerfüße geeignete Trittplatte auszubilden. Durch solch ein flächenmäßig großes Teil ist sichergestellt, daß der Fahrer beim Betreten der Standplattform diese zwangsläufig verriegelt und den Totmannschalter in die Fahrposition bringt.

Die Verriegelungsvorrichtung für die Standplattform kann rein mechanisch aufgebaut sein. Beispielsweise ist es möglich, beim Betätigen der Trittplatte ein damit gekoppeltes Gestänge zu bewegen, das mit einer die Standplattform verriegelnden Sperrklinke in Wirkverbindung steht. Es erweist sich jedoch als vorteilhafter, das Betätigungselement mit einem Steuerschalter zu koppeln, der in Betriebsstellung der Standplattform im unbetätigten Zustand eine die Stromzufuhr zu mindestens einem Elektromagneten unterbrechende Schaltstellung aufweist, wobei der Elektromagnet in Wirkverbindung mit einem die Standplattform in der Betriebsstellung verriegelnden Lagesicherungsbolzen steht. Eine solche Konstruktion läßt sich mit nur geringem Aufwand realisieren, zumal das Fahrzeug ohnehin eine Stromquelle aufweist. Der Lagesicherungsbolzen kann federkraftbelastet sein und wird, sobald der Elektromagnet durch Betätigen der Trittplatte strombeaufschlagt ist, entgegen der Federkraft in eine Stellung gedrückt, in der er die in Betriebsstellung befindliche Standplattform verriegelt.

Gemäß einer vorteilhaften Ausgestaltung des Erfindungsgegenstandes wird vorgeschlagen, daß zwei beiderseits der Standplattform parallel zur Fahrzeuglängsachse anbringbare Seitenteile vorgesehen sind und jedes Seitenteil um eine an der Fahrzeugvorderseite seitlich der Standplattform angeordnete Vertikalachse von einer quer zur Fahrzeuglängsachse vorgesehenen Ruhestellung in die Betriebsstellung schwenkbar und dort einrastbar ist. Es wird somit verhindert, daß der Fahrer bei Kurvenfahrten vom Fahrzeug fällt.

Um zu verhindern, daß das Fahrzeug in der Betriebsart Elektro-Stand-Gerät ohne ausgeschwenkte Seitenteile fahrbar ist, oder daß das Fahrzeug in der Betriebsart Elektro-Geh-Gerät mit ausgeschwenkten Seitenteilen benutzt wird, was beides zu Unfällen führen könnte, ist es zweckmäßig, daß die Seitenteile mit positionserfassenden Endschaltern in Wirkverbindung stehen, die eine die Stromzufuhr zum Antriebsmotor unterbrechende und gegebenenfalls die elektrisch lüftbaren Federspeicherbremsen aktivierende Schaltstellung aufweisen, die bei gleichzeitiger Betriebstellung von Standplattform und beiden Seitenteilen sowie bei gleichzeitiger Ruhestellung von Standplattform und beiden Seitenteilen unwirksam ist.

Die Erfindung soll anhand der nachstehend beschriebenen schematischen Figuren in einem Ausführungsbeispiel näher erläutert werden.

Es zeigen:
- Figur 1: eine Seitenansicht eines erfindungsgemäßes Flurförderzeug in der Betriebsart Elektro-Geh-Gerät,
- Figur 2: eine Draufsicht auf das Flurförderzeug in der Betriebsart Elektro-Stand-Gerät,
- Figur 3: eine Seitenansicht der Standplattform,
- Figur 4: eine Ansicht der Fahrzeugvorderseite bei abgenommener Standplattform,
- Figur 5: eine Draufsicht auf die Standplattform im Teilschnitt der Fahrzeugvorderseite gemäß Linie V-V in Figur 4,
- Figur 6: einen Querschnitt der Standplattform gemäß Linie VI-VI in Figur 5.

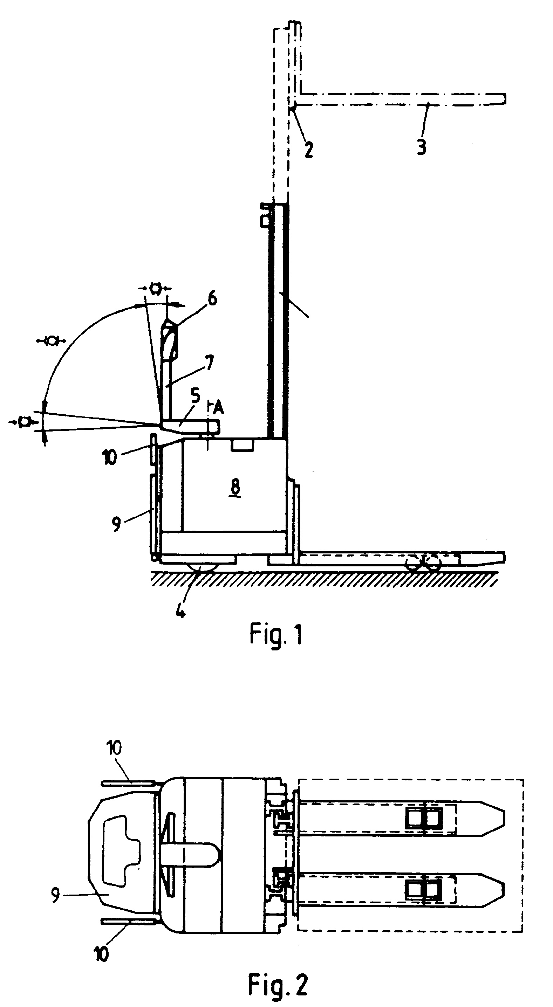

In Figur 1 ist als Beispiel eines erfindungsgemäßen Flurförderzeugs ein Elektro-Gabel-Hochhubwagen mit einem an einem Hubgerüst 1 vertikal verfahrbaren Lastträger 2, an dem die lastaufnehmenden Gabeln 3 befestigt sind, gezeigt. Das Lenk- und Antriebsrad 4 ist über eine Deichsel 5 um eine Achse A schwenkbar. Die Deichsel 5 ist mit einem die Bedienungselemente des Fahrzeuges tragenden Deichselkopf 6 versehen, der mittels eines Bügels 7 vertikal schwenkbar ist, wobei der Bügel 7 durch eine in der Figur nicht dargestellte Rückzugsfeder in Ruhestellung in eine vertikale Position gedrückt wird, in der über eine geeignete Schaltanordnung die Stromzufuhr zu dem elektrischen Fahrantriebsmotor unterbrochen ist und die elektrisch lösbaren Federspeicherbremsen des Fahrzeugs geschlossen sind. Zum Bewegen des Fahrzeugs muß der Deichselkopf 6 samt Bügel 7 um einen gewissen Betrag aus der vertikalen Stellung herausbewegt werden, damit die Federspeicherbremsen gelöst werden und eine Stromzufuhr zum elektrischen Antriebsmotor ermöglicht wird. Im Falle, daß die Rückzugsfeder des Bügels 7 defekt ist, fällt dieser in eine horizontale Position, in der die Stromzufuhr zum elektrischen Antriebsmotor ebenfalls unterbrochen ist und die Federspeicherbremsen wieder geschlossen sind. Im Bereich zwischen diesen beiden Extrempositionen ist die Bremse gelöst und die Stromzufuhr zum Antriebsmotor ermöglicht.

Das Fahrzeug weist einen Batteriekasten 8 auf, in dem die Antriebsbatterien angeordnet sind. An der Vorderseite des Fahrzeugs, das heißt am deichselseitigen Ende des Fahrzeugs, ist eine in dieser Figur in hochgeklappter Stellung, d.h. in Ruhestellung gezeigte Standplattform 9 angebracht. Weiterhin sind dort zwei schwenkbare Seitenteile 10 vorgesehen, die in Figur 1 ebenfalls in Ruhestellung, d.h. in eingeklappter, zur Frontseite des Fahrzeugs parallelen Stellung gezeigt sind. In dieser Ruhestellung der Seitenteile 10 und der Standplattform 9 ist das Flurförderzeug für die Betriebsart Elektro-Geh-Gerät vorgesehen, in der sich die Bedienperson relativ frei zum Fahrzeug bewegen und mit diesem gut rangieren kann, allerdings bei fahrendem Fahrzeug diesem voraus- bzw. hinterhergehen muß, je nach gewünschter Fahrtrichtung.

In Figur 2 ist das Flurförderzeug in der Betriebsstellung Elektro-Stand-Gerät gezeigt, in der die Standplattform 9 in eine horizontale Position geklappt ist und die Seitenteile 10 ausgeschwenkt sind, sich also in einer die Seitenwände des Fahrzeuges verlängernden Position befinden. In dieser Betriebsstellung kann die Bedienperson auf dem Fahrzeug mitfahren, was insbesondere beim Gütertransport über längere Strecken vorteilhaft ist, weil die Fahrzeuggeschwindigkeit deutlich über die Schrittgeschwindigkeit hinaus angehoben werden kann.

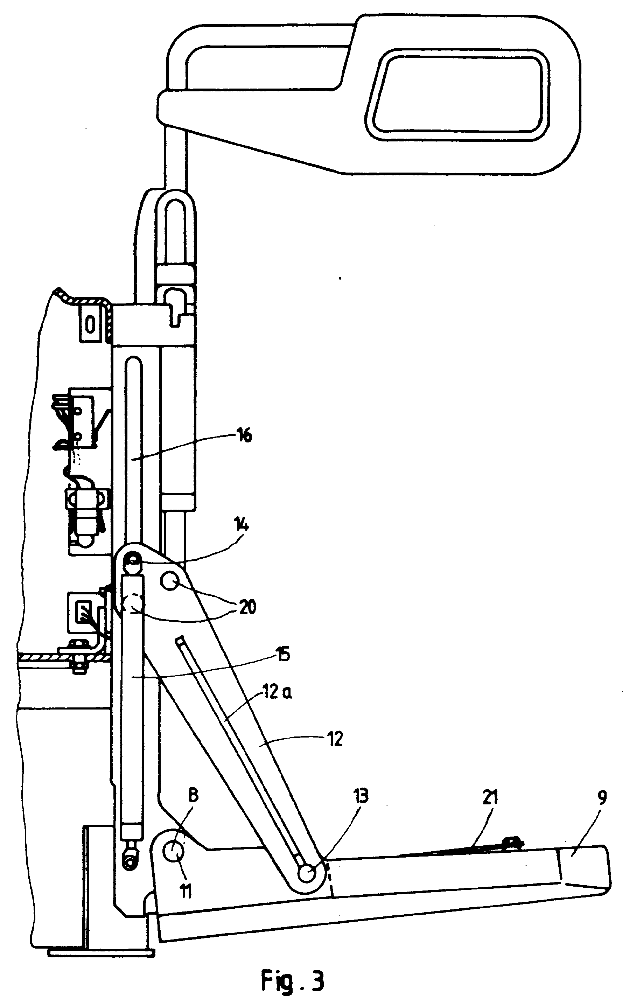

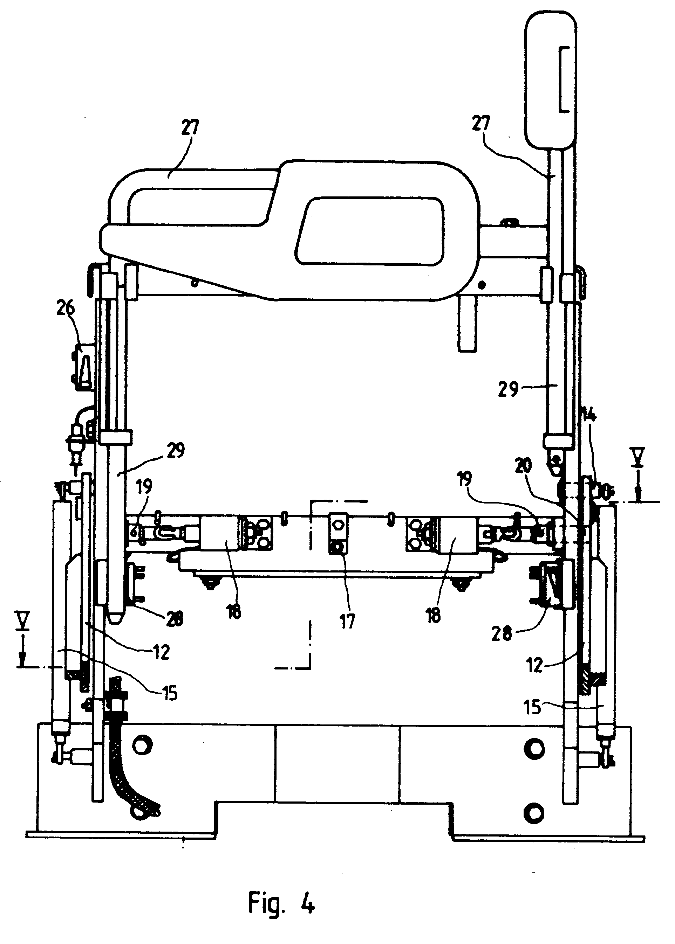

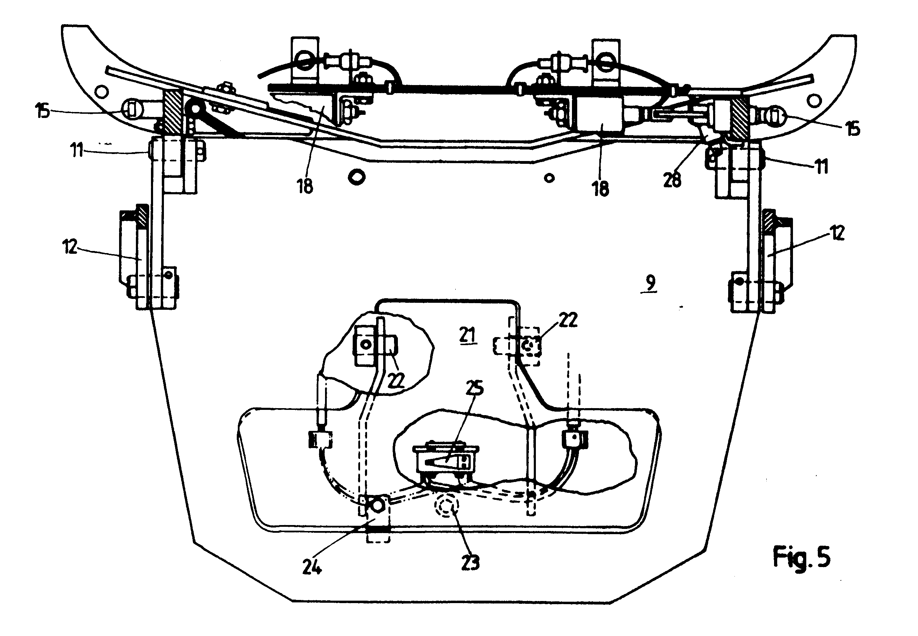

Aus der in Figur 3 dargestellten Seitenansicht der Standplattform 9 ist in Verbindung mit den Figuren 4 und 5 deren Anordnung und Betätigung erkennbar.

Die Standplattform 9 ist um eine deichselseitig quer zur Fahrzeuglängsachse angeordnete Achse B von einer annähernd vertikalen Ruhestellung in eine annähernd horizontale Betriebsstellung schwenkbar. Die Schwenkbarkeit der Standplattform 9 wird durch in der Achse B angeordnete Bolzenverbindungen 11 ermöglicht. An den beiden zur Fahrzeuglängsachse in etwa parallelen Außenseiten der Standplattform 9 ist jeweils ein Ende eines Schwenkhebels 12 mittels einer Bolzenverbindung 13 befestigt, wobei die Bolzenverbindungen 13 zu den Bolzenverbindungen 11 beabstandet sind. Das andere Ende jedes Schwenkhebels 12 ist über eine Bolzenverbindung 14 sowohl an dem oberen Ende einer in vertikaler Richtung wirkenden Gasfeder 15 befestigt als auch in einer dem Fahrzeugheck zugeordneten Vertikalnut 16 geführt. Das untere Ende jeder Gasfeder 15 ist am Fahrzeugheck befestigt. Die Gasfedern 15 üben auf die Standplattform 9 mittels der Verbindung durch die Schwenkhebel 12 eine zur vertikalen Ruhestellung hin gerichtete Kraft aus.

Bei in Ruhestellung befindlicher Standplattform 9 sind die Gasfedern 15 bis auf eine bestimmte Vorspannung entspannt. Die aus der Vorspannung herrührende Federkraft genügt jedoch, um die Standplattform 9 sicher in der Ruhestellung zu halten.

Die Standplattform 9 kann in Betriebsstellung durch eine Verriegelungsvorrichtung fixiert werden, die eine Bewegung der Standplattform 9 aus der Betriebsstellung heraus verhindert. Die Verriegelungsvorrichtung, die in diesem Beispiel doppelt vorhanden ist, besteht jeweils aus einem Elektromagneten 18, der einen Lagesicherungsbolzen 19 betätigt. Der Lagesicherungsbolzen 19, der am Fahrzeugheck längsbeweglich befestigt ist, greift im ausgefahrenen, also betätigten Zustand in eine Bohrung 20 des Schwenkhebels 12, so daß dieser sich nicht mehr bewegen läßt und daher auch nicht die Standplattform 9. Jedem Schwenkhebel 12 ist eine solche Verriegelungsvorrichtung zugeordnet. Da jeder Schwenkhebel 12 mit einer zur Fahrzeugaußenseite hin angeordneten Versteifungsrippe 12a versehen ist, die Schwenkhebel 12 aus Gründen einer rationalen Fertigung aber an beiden Außenseiten verwendbar sein sollen, sind an jedem Schwenkhebel 12 zwei zur Schwenkhebel-Mittelachse symmetrische Bohrungen 20 vorgesehen.

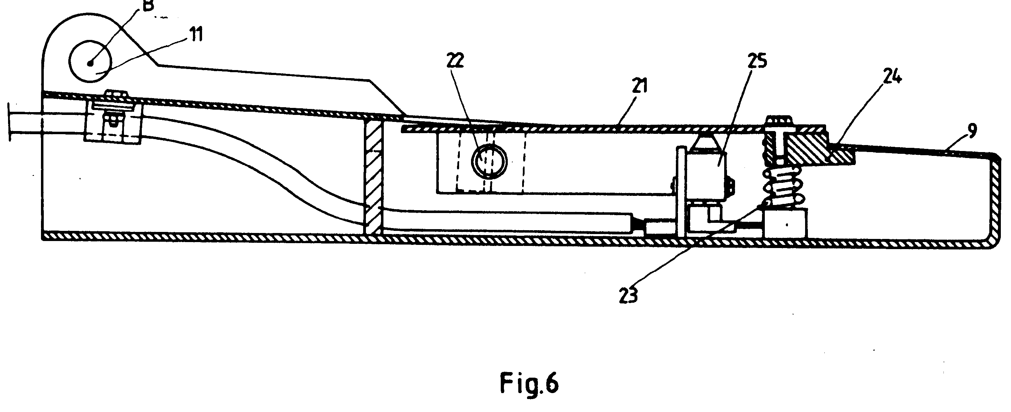

Die Betätigung der Verriegelungseinrichtungen wird nachfolgend unter Bezugnahme auf die Figuren 5 und 6 erläutert:

Die Standplattform 9 ist mit einer zur gleichzeitigen Aufnahme beider Fahrerfüße geeigneten Trittplatte 21 versehen. Die Trittplatte 21 ist annähernd planparallel und höhengleich zur Standplattform 9 angeordnet und stellt damit einen Teil der Oberfläche der Standplattform 9 dar. Infolge einer einseitigen Lagerung der Trittplatte 21 durch Bolzenverbindungen 22 und eine mit Abstand zu dieser Lagerung erfolgende Belastung der Trittplatte 21 durch eine Druckfeder 23 wird die Trittplatte 21, sofern kein Fahrer auf ihr steht, an ihrem der Lagerung entgegengesetzten Ende etwas aus der Standplattform herausgehoben. Eine Hubbegrenzung der Trittplatte 21 und Vorspannung der Druckfeder 23 wird durch einen Anschlag 24 erreicht.

Bei Belastung der Trittplatte 21 durch den Fahrer wird bei deren Abwärtsbewegung ein Steuerschalter 25 betätigt, der durch eine geeignete Steuerschaltung die Beaufschlagung der Elektromagneten 21 mit Strom veranlaßt, so daß die Lagesicherungsbolzen 19 ausfahren und die Standplattform verriegelt wird. Der Steuerschalter 25 dient in diesem Beispiel gleichzeitig als Totmannschalter, der im unbetätigten Zustand, also bei nichtbelasteter Trittplatte 21 die Stromzufuhr zum elektrischen Antrieb des Fahrzeugs unterbricht. Es ist aber auch möglich, hierfür einen eigenen Schalter vorzusehen.

Da bei in Ruhestellung geklappter Standplattform 9 die Trittplatte 21 nicht durch den Fahrer bedient werden kann, muß eine andere Möglichkeit vorhanden sein, den elektrischen Antriebsmotor des Fahrzeugs mit Strom zu beaufschlagen und die elektrischen Federspeicherbremsen zu lüften. Dies kann beispielsweise durch einen oder mehrere Anschlagstifte geschehen, die bei hochgeklappter Standplattform 9 auf die Trittplatte 21 drücken und den Steuerschalter 25 betätigen. Es ist aber auch möglich, wie in diesem Beispiel gezeigt, einen Endschalter 26 vorzusehen, der der Erfassung der Ruhestellung der Standplattform 9 dient und von einem der hochgefahrenen Schwenkhebel 12 betätigt wird, wobei der Endschalter 26 so geschaltet sein muß, daß der Steuerschalter 25 umgangen wird.

Wie insbesondere aus Figur 4 ersichtlich ist, sind beiderseits der Standplattform 9 zwei jeweils um Vertikalachsen schwenkbare, als Sicherheitsbügel ausgebildete Seitenteile 27 vorgesehen. In Ruhestellung sind die Seitenteile 27 quer zur Fahrzeuglängsachse angeordnet. Zur Erfassung dieser Position ist für jedes Seitenteil 27 ein entsprechender Endschalter 28 vorgesehen, der von einer Führungsstange 29 des Seitenteiles 27 betätigt wird. Um in die Betriebsstellung zu gelangen, wird jedes Seitenteil 27 angehoben, so daß die Führungsstange 29 außer Eingriff mit dem Endschalter 28 kommt, um 90 ° geschwenkt und anschließend geringfügig abgesenkt, wodurch das Seitenteil 27 in der Betriebsstellung fixiert wird.

Die Endschalter 28 und der Endschalter 26 sind so geschaltet, daß der Fahrantriebsstrom des Fahrzeuges unterbrochen ist und gegebenenfalls die Federspeicherbremsen geschlossen sind, wenn sich bei herabgeklappter Standplattform 9 trotz betätigten Steuerschalters 25 keines oder nur eines der Seitenteile 27 in Betriebsstellung befindet. Der Fahrstrom ist ebenfalls unterbrochen, wenn zwar beide Seitenteile 27 ausgeschwenkt sind, aber die Standplattform 9 sich in hochgeklappter Ruhestellung befindet. Auf diese Weise werden Gefahrenzustände vermieden. Das Fahrzeug kann also nur in Bewegung gesetzt werden, wenn es sich in den vorschriftsmäßigen Betriebsstellungen Elektro-Geh-Gerät oder Elektro-Stand-Gerät befindet.

## Patentansprüche

1. Deichselgeführtes elektrisches Flurförderzeug zum wahlweisen Betrieb als Elektro-Geh-Gerät oder als Elektro-Stand-Gerät mit einer Standplattform, dadurch gekennzeichnet, daß die Standplattform (9) klappbar und mit einer in Betriebsstellung vom Fahrer betätigbaren und im betätigten Zustand eine Bewegung der Standplattform (9) aus der Betriebsstellung heraus verhindernden Verriegelungseinrichtung (18, 19, 20) versehen ist.

2. Flurförderzeug nach Anspruch 1, dadurch gekennzeichnet, daß die Standplattform mit einem fußbetätigten Totmannschalter versehen ist und der Totmannschalter und die Verriegelungseinrichtung (18, 19, 20) ein gemeinsames Betätigungselement aufweisen.

3. Flurförderzeug nach Anspruch 2, dadurch gekennzeichnet, daß das Betätigungselement als zur gleichzeitigen Aufnahme beider Fahrerfüsse geeignete Trittplatte (21) ausgebildet ist.

4. Flurförderzeug nach Anspruch 2 oder 3, dadurch gekennzeichnet, daß das Betätigungselement mit einem Steuerschalter (25) gekoppelt ist, der in Betriebsstellung der Standplattform (9) im unbetätigten Zustand eine die Stromzufuhr zu mindestens einem Elektromagneten (18) unterbrechende Schaltstellung aufweist, wobei der Elektromagnet (18) in Wirkverbindung mit einem die Standplattform (9) in der Betriebsstellung verriegelnden Lagesicherungsbolzen (19) steht.

5. Flurförderzeug nach Anspruch 4, dadurch gekennzeichnet, daß zwei beiderseits der Standplattform parallel zur Fahrzeuglängsachse anbringbare Seitenteile vorgesehen sind und jedes Seitenteil (27) um eine an der Fahrzeugvorderseite seitlich der Standplattform (9) angeordnete Vertikalachse von einer quer zur Fahrzeuglängsachse vorgesehenen Ruhestellung in die Betriebsstellung schwenkbar und dort einrastbar ist.

6. Flurförderzeug nach Anspruch 5, dadurch gekennzeichnet, daß die Seitenteile (27) mit positionserfassenden Endschaltern (28) in Wirkverbindung stehen, die eine die Stromzufuhr zum Antriebsmotor unterbrechende Schaltstellung aufweisen, die bei gleichzeitiger Betriebsstellung von Standplattform (9) und beiden Seitenteilen (27) sowie bei gleichzeitiger Ruhestellung von Standplattform und beiden Seitenteilen unwirksam ist.

## Claims

1. Tiller-guided electric industrial truck for optional operation as a pedestrian-controlled electric device or as a stand-on electric device with a standing platform, characterised in that the standing platform (9) is foldable and provided with a locking device (18, 19, 20) which can be actuated by the operator in the operating position and in the actuated state prevents movement of the standing platform (9) out of the operating position.

2. Industrial truck according to claim 1, characterised in that the standing platform is provided with a foot-operated dead man's switch and the dead man's switch and the locking device (18, 19, 20) exhibit a common actuating element.

3. Industrial truck according to claim 2, characterised in that the actuating element is embodied as a pedal (21) suitable for simultaneously accommodating both the operator's feet.

4. Industrial truck according to claim 2 or 3, characterised in that the actuating element is coupled to a control switch (25) which in the operating position of the standing platform (9) in the unactuated state exhibits a switch position cutting the power supply to at least one electromagnet (18), the electromagnet (18) being in operative connection with a position locking pin (19) locking the standing platform (9) in the operating position.

5. Industrial truck according to claim 4, characterised in that two side parts are provided which can be attached on both sides of the standing platform parallel to the longitudinal axis of the vehicle, and each side part (27) is pivotable about a vertical axis disposed at the front of the vehicle to the side of the standing platform (9) from a resting position at right-angles to the longitudinal axis of the vehicle into the operating position and lockable in it.

6. Industrial truck according to claim 5, characterised in that the side parts (27) are in operative connection with position-sensing limit switches (28) which exhibit a switch position cutting the power supply to the driving motor and which is ineffective when the standing platform (9) and the two side parts (27) are in their operating position at the same time and when the standing platform and the two side parts are in their resting position at the same time.

## Revendications

1. Chariot de manutention électrique guidé avec un timon pour être exploité au choix comme engin électrique à conducteur à pied ou bien comme engin électrique à conducteur porté, avec une plate-forme porteuse, caractérisé en ce que la plate-forme porteuse (9) est susceptible d'être rabattue et est munie d'un dispositif de verrouillage (18, 19, 20) susceptible d'être actionné par le conducteur dans la position de fonctionnement de la plate-forme (9) et qui lorsqu'il est actionné, empêche un déplacement de la plate-forme porteuse (9) à partir de sa position de fonctionnement.

2. Chariot de manutention selon la revendication 1, caractérisé en ce que la plate-forme porteuse est munie d'un commutateur d'homme mort actionné au pied, et ce commutateur d'homme mort, ainsi que le dispositif de verrouillage (18, 19, 20) comportent un élément d'actionnement commun.

3. Chariot de manutention selon la revendication 2, caractérisé en ce que l'élément d'actionnement revêt la forme d'une plaque marchepied (21) susceptible de recevoir simultanément les deux pieds du conducteur.

4. Chariot de manutention selon la revendication 2 ou la revendication 3, caractérisé en ce que l'élément d'actionnement est couplé avec un commutateur de commande (25), qui dans la position de fonctionnement de la plate-forme porteuse (9) occupe, lorsqu'il n'est pas actionné, une position de commutation interrompant l'arrivée du courant à au moins un électro-aimant (18), tandis que cet électroaimant (18) est en liaison d'action avec un goujon de blocage en position (19) verrouillant la plate-forme porteuse (9) dans sa position de fonctionnement.

5. Chariot de manutention selon la revendication 4, caractérisé en ce qu'il est prévu sur les deux côtés de la plate-forme porteuse, deux parties latérales susceptibles d'être amenées parallèlement à l'axe longitudinal du véhicule et chacune de ces parties latérales (27) est susceptible de pivoter autour d'un axe vertical disposé à l'avant du véhicule à côté de la plate-forme porteuse (9), d'une position de repos prévue transversalement par rapport à l'axe longitudinal du véhicule, dans sa position de fonctionnement où elle est susceptible d'être verrouillée.

6. Chariot de manutention selon la revendication 5, caractérisé en ce que les parties latérales (27) sont en liaison d'action avec des commutateurs de fin de course (28) détectant leur position et qui comportent une position de commutation interrompant l'arrivée de courant au moteur d'entraînement, position de commutation qui est inopérante lorsque la plate-forme porteuse (9) et les deux parties latérales (27) se trouvent simultanément dans leur position de fonctionnement, ainsi que lorsque la plate-forme porteuse et les deux parties latérales se trouvent simultanément dans leur position de repos.
